# EUROPÄISCHE PATENTSCHRIFT

(11) **EP 2 208 811 B1**
(45) Veröffentlichungstag und Bekanntmachung des Hinweises auf die Patenterteilung: **11.09.2013**
(21) Anmeldenummer: 10150533.7
(22) Anmeldetag: 12.01.2010
(51) Int. Cl.: D01D 4/02, D01D 5/098

(54) **Vorrichtung zum Schmelzblasen**
Device for melt blowing
Dispositif de soufflage de fusion

(30) Priorität: 14.01.2009 DE 102009004541
(43) Veröffentlichungstag der Anmeldung: 21.07.2010
(73) Patentinhaber: Oerlikon Textile GmbH & Co. KG, 42897 Remscheid (DE)
(72) Erfinder: Schütt, Günter, 24539, Neumünster (DE); Mueller-Reichau, Nicola, 24118, Kiel (DE); Potratz, Bernhard, 22523, Hamburg (DE)
(74) Vertreter: Kahlhöfer, Hermann

(56) Entgegenhaltungen:
- EP-A1- 0 866 152
- CN-Y- 2 621 186
- DE-A1- 4 040 242
- DE-A1-102005 053 248
- US-A1- 2003 234 464

## Beschreibung

Die Erfindung betrifft eine Vorrichtung zum Schmelzblasen von synthetischen Fasern gemäß dem Oberbegriff des Anspruchs 1.

Eine gattungsgemäße Vorrichtung zum Schmelzblasen ist beispielsweise aus der DE 10 2005 053 248 A1 bekannt.

Bei der Herstellung von synthetischen Fasern aus einer Schmelze eines thermoplastischen Materials ist es bekannt, dass die frisch extrudierten Fasern mittels einer heißen Prozessluft aus einer Extrusionsöffnung einer Spinndüse abgezogen werden. Dieses Verfahren wird als Schmelzblasen (Meltblown) bezeichnet und wird vorzugsweise zur Herstellung von synthetischen Faservliesen eingesetzt. Die durch die Prozessluft geführten Fasern werden nach dem Extrudieren und Verfestigen auf eine Ablageband zu einem Faservlies abgelegt. Für die Ausführung derartiger Verfahren werden Vorrichtungen verwendet, bei welcher eine thermoplastische Schmelze und eine heiße Prozessluft zusammengeführt werden müssen. Eine derartige Vorrichtung zum Schmelzblasen ist beispielsweise in der DE 10 2005 053 248 A1 beschrieben. Hierbei wird an einer Unterseite eines Düsenträgers ein Düsenpaket gehalten, das über Schmelzekanäle und Luftkanäle in dem Düsenträger angeschlossen ist. Die Einleitung der Prozessluft erfolgt zu beiden Längsseiten des Düsenträgers, an welchem sich jeweils eine Luftröhre erstreckt, in welcher die heiße Prozessluft geführt ist. Um die Luftkanäle in dem Düsenträger mit den Luftröhren zu verbinden, sind an jeder Längsseite des Düsenträgers Luftverteileinrichtungen befestigt. Die Luftverteileinrichtungen sind über die gesamte Länge des Düsenträgers an der Längsseite gehalten.

Bei der Herstellung von Faservliesen besteht nun der Wunsch, möglichst große Arbeitsbreiten herzustellen, so dass entsprechend lange Düsenträger und Düsenpakete erforderlich sind, um derartige Faservliese zu bilden. Hierbei machen sich jedoch die aufgrund der Erwärmung der Bauteile auftretenden Längenausdehnungen insbesondere im Bereich der Luftverteileinrichtungen nachteilig bemerkbar. So treten insbesondere in der Trennfuge zwischen dem Düsenträger und der Luftverteileinrichtung ungewünschte Spannungszustände auf, die bis zur Zerstörung von Befestigungselementen führen können.

Es ist daher Aufgabe der Erfindung, eine Vorrichtung zum Schmelzblasen der gattungsgemäßen Art derart auszubilden, dass unabhängig von der Länge des Düsenträgers eine sichere Luftzuführung der heißen Prozessluft über die gesamte Länge des Düsenträgers möglich ist.

Diese Aufgabe wird erfindungsgemäß dadurch gelöst, dass die Luftverteileinrichtungen durch mehrere an den Längsseiten des Düsenträgers verteilt angeordnete Verteilsegmente mit jeweils einer Dehnfuge zwischen benachbarten Verteilsegmenten gebildet sind.

Vorteilhafte Weiterbildungen der Erfindung sind durch die Merkmale und Merkmalskombinationen der jeweiligen Unteransprüche definiert.

Die Erfindung besitzt den besonderen Vorteil, dass der Düsenträger und die Luftverteileinrichtungen in ihrem Wärmeverhalten nicht aufeinander abgestimmt werden müssen. Durch die Aufsplittung in mehrere Teilsegmente lassen sich die an der Luftverteileinrichtung eintretenden Längenausdehnungen aufgrund der hohen Temperaturen der Prozessluft in unkritischen Größenordnungen halten. Somit können unzulässige Spannungszustände bei der Befestigung der Luftverteileinrichtung an dem Düsenträger vermieden werden.

Eine weitere Verbesserung der Luftzuführung lässt sich durch die Weiterbildung der Erfindung erreichen, bei welcher jedes der Verteilsegmente aus einem am Düsenträger befestigten Verteilblock und einer mit der Luftröhre verbundenen Versorgungsleitung gebildet ist. Dadurch lässt sich eine starre Verbindung zwischen den Luftröhren und dem Düsenträger vermeiden. Die Materialbeschaffenheit sowie die Ausführung der Luftröhren ist somit frei gestaltbar. Hierbei müssen lediglich die Anforderungen erfüllt werden, die zu einer Bereitstellung einer heißen Prozessluft erforderlich sind. Eine Anpassung an die Gegebenheiten des Düsenträgers ist nicht mehr erforderlich.

Um die im Betrieb unterschiedlich auftretenden Wärmeausdehnungen zwischen dem Düsenträger und den Luftröhren zu eliminieren, ist die Weiterbildung der Erfindung bevorzugt verwendet, bei welcher die Versorgungsleitungen jeweils in einem Abstand zwischen der Luftröhre und dem Verteilblock flexibel ausgebildet sind. Damit lässt sich eine zusätzliche Entkopplung der Bauteile realisieren.

Um über die gesamte Länge des Düsenpaketes eine möglichst gleichmäßige Zuführung der Prozessluft zu erhalten, bilden die Verteilerblöcke an den Längsseiten des Düsenträgers jeweils einzelne Verteilkammern, die gleichzeitig mehrere Luftkanäle des Luftkanalsystems im Düsenträger versorgen.

Eine weitere Ausbildung der Erfindung sieht vor, dass der Düsenträger und die Verteilblöcke aus unterschiedlichen Materialien gebildet sind. So lassen sich insbesondere die Verteilblöcke aus Materialien bilden, die zur Prozessluftführung besonders geeignet sind.

Die erfindungsgemäße Vorrichtung ist unabhängig von der Länge des Düsenträgers. Jedoch wirken sich die Vorteile gegenüber herkömmlichen Vorrichtungen insbesondere bei größeren Gesamtlängen des Düsenträgers aus. So ist die Weiterbildung der Erfindung bevorzugt angewendet, bei welcher der Düsenträger zur Aufnahme des Düsenpaketes und der Verteilsegmente der Luftverteileinrichtung eine Gesamtlänge von mehr als 1.500 mm aufweist.

Die Erfindung wird nun anhand einiger Ausführungsbeispiele unter Bezug der beigefügten Figuren näher erläutert.

### Es stellen dar:

- Fig. 1: schematisch eine Querschnittsansicht eines Ausführungsbeispiels der erfindungsgemäßen Vorrichtung
- Fig. 2: schematisch eine Seitenansicht des Ausführungsbeispiels nach Fig. 1
- Fig. 3: schematisch ein Ausschnitt der Seitenansicht des Ausführungsbeispiels aus Fig. 2
- Fig. 4: schematisch eine Seitenansicht eines weiteren Ausführungsbeispiels der erfindungsgemäßen Vorrichtung

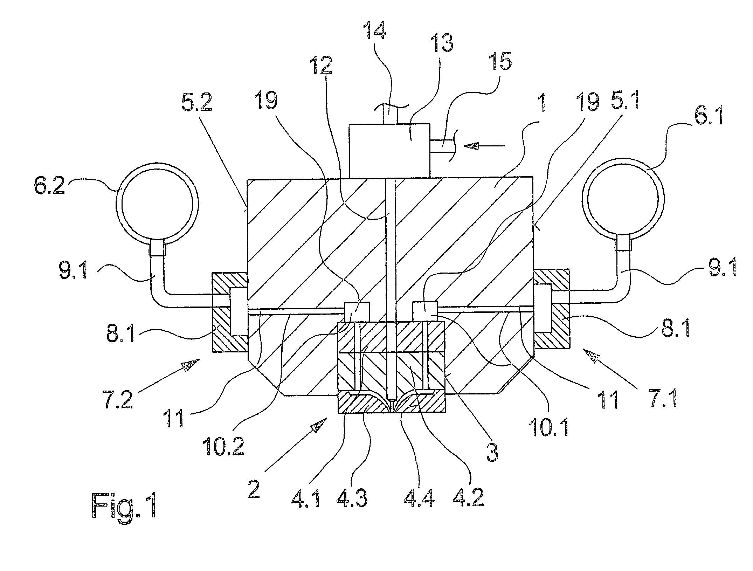

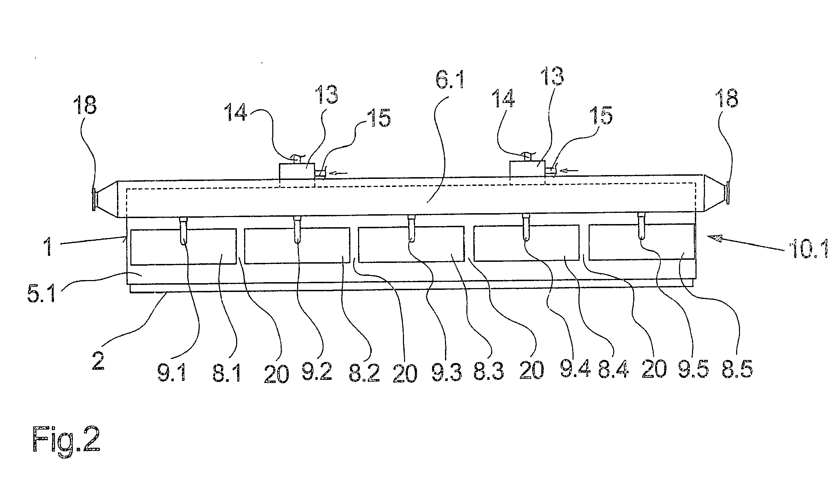

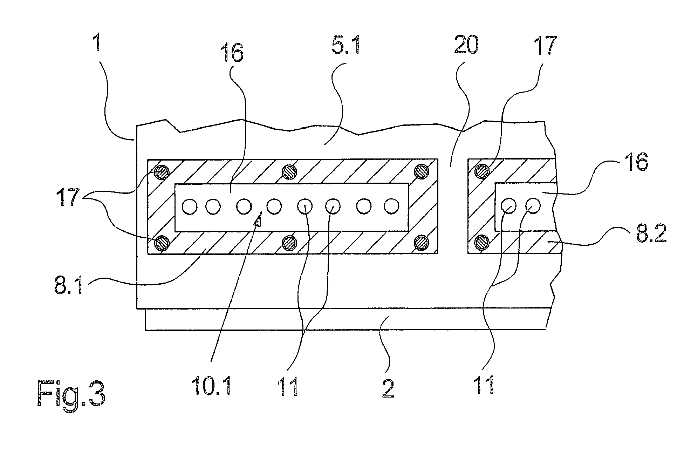

In den Fig. 1, 2 und 3 ist ein erstes Ausführungsbeispiel der erfindungsgemäßen Vorrichtung in mehreren Ansichten dargestellt. In Fig. 1 ist das Ausführungsbeispiel in einer Querschnittsansicht, in Fig. 2 in einer Seitenansicht und in Fig. 3 in einem Ausschnitt der Seitenansicht gezeigt. Insoweit kein Bezug zu einer der Figuren gemacht ist, gilt die nachfolgende Beschreibung für alle Figuren.

Das Ausführungsbeispiel der erfindungsgemäßen Vorrichtung weist einen quaderförmigen Düsenträger 1 auf. An der Unterseite trägt der Düsenträger 1 ein Düsenpaket 2. Wie aus der Ansicht in Fig. 1 hervorgeht, ist das Düsenpaket 2 in einer Anschlussnut 3 des Düsenträgers 1 gehalten. Über die Anschlussnut 3 ist das Düsenpaket 2 mit Schmelzekanälen 12 und Luftkanälen 11 verbunden.

Das Düsenpaket 2 weist in diesem Ausführungsbeispiel beispielhaft mehrere Platten auf, die durch eine Zwischenplatte 4.1, eine Düsenplatten 4.2 und zwei Luftleitplatten 4.3 und 4.4 gebildet sind. Dabei sind auf einer Auslassseite des Düsenpaketes 2 eine Vielzahl von Düsenöffnungen und seitlich neben den Düsenöffnungen ausgebildete Blasöffnungen vorgesehen. Derartige Düsenpakete 2 sind hinlänglich bekannt, so dass an dieser Stelle keine weitere Erläuterung zu dem Aufbau und der Ausbildung des Düsenpaketes 2 gegeben wird.

Wie aus der Fig. 1 und 2 hervorgeht, wird die Schmelze eines thermoplastischen Materials über mehrere Spinnpumpen 13 den Schmelzekanälen 12 innerhalb des Düsenträgers 1 zugeführt. Hierzu weist die Spinnpumpe 13 einen Schmelzezulauf 15 auf. Über jeweils eine Antriebswelle 14 sind die Spinnpumpen mit einem hier nicht dargestellten Antrieb gekoppelt.

Zur Zuführung einer Prozessluft sind in dem Düsenträger 1 zwei symmetrisch ausgebildete Luftkanalsysteme 10.1 und 10.2 ausgebildet. Aus der Darstellung in Fig. 1 geht hervor, dass jeder der Luftkanalsysteme 10.1 bis 10.2 eine Mehrzahl an den Längsseiten 5.1 und 5.2 des Düsenträgers 1 angeordnete Luftkanäle 11 aufweist. Die Luftkanäle 11 münden innerhalb des Düsenträgers 1 in Verteilnuten 19, die unmittelbar mit dem Düsenpaket 2 verbunden sind.

Die Luftkanäle 11 der Luftkanalsysteme 10.1 und 10.2 sind jeweils an einer Luftverteileinrichtung 7.1 und 7.2 angeschlossen. Die Luftverteileinrichtungen 7.1 und 7.2 an den beiden Längsseiten 5.1 und 5.2 des Düsenträgers 1 sind identisch ausgebildet, wobei in den Darstellungen von Fig. 2 und 3 nur die Luftverteileinrichtung 7.1 dargestellt ist. Aufgrund der Baugleichheit sind die in Fig. 2 und 3 dargestellten Ausführungen auch für die Luftverteileinrichtung 7.2 gültig.

Zur Erläuterung der Luftverteileinrichtung 7.1 und 7.2 wird nachfolgend daher nur die Luftverteileinrichtung 7.1 mit Bezug zu allen Figuren näher beschrieben.

Die Luftverteileinrichtung 7.1 ist durch mehrere Verteilsegmente gebildet, die unmittelbar an der Längsseite 5.1 befestigt sind. In diesem Ausführungsbeispiel weist die Luftverteileinrichtung 7.1 insgesamt fünf Verteilsegmente auf, die in diesem Ausführungsbeispiel durch fünf Verteilblöcke 8.1 bis 8.5 und fünf Versorgungsleitungen 9.1 bis 9.5 gebildet sind. Hierbei ist jeweils zwischen benachbarten Verteilsegmenten eine Dehnungsfuge 20 gebildet, so dass ein kleiner Abstand zwischen den Verteilblöcken 8.1 bis 8.5 entsteht. Diese Situation geht insbesondere aus der Abbildung aus Fig. 3 hervor, bei welcher die Dehnfuge 20 zwischen den Verteilblöcken 8.1 und 8.2 der Luftverteileinrichtung 7.1 gezeigt ist.

Die Verteilblöcke 8.1 bis 8.5 bilden an der Längsseite 5.1 des Düsenträgers 1 mehrere Verteilkammern 16, die sich jeweils über die Mündungen mehrerer Luftkanäle 11 des Luftkanalsystems 10.1 erstreckt. Somit werden aus der Verteilkammer 16 des Verteilblocks 8.1 eine Mehrzahl von Luftkanälen 11 des Luftkanalsystems 10.1 versorgt, wie in Fig. 3 dargestellt ist. Die Verteilblöcke 8.1 bis 8.5 sind hierbei mittels Befestigungsbolzen 17 unmittelbar druckdicht an der Längsseite 5.1 des Düsenträgers 1 befestigt.

Jedem der Verteilblöcke 8.1 bis 8.5 ist eine Versorgungsleitung 9.1 bis 9.5 zugeordnet, die einerseits in die Verteilkammern 16 der Verteilblöcke 8.1 bis 8.5 münden und andererseits mit der Luftröhre 6.1 verbunden sind. Die Versorgungsleitungen 9.1 bis 9.5 sind auf ihre Gesamtlänge oder einem Längenabschnitt flexibel ausgeführt, so dass zwischen der Luftverteileinrichtung 7.1 und der Luftröhre 6.1 keine starre Verbindung entsteht.

Wie aus den Darstellungen in Fig. 1 und 2 hervorgeht, ist die Luftröhre 6.1 rohrförmig ausgebildet und weist jeweils an den Enden einen Rohrflansch 18 auf. Über die Rohrflanschverbindung lässt sich eine heiße Prozessluft der Luftröhre 6.1 zuführen. Über die Versorgungsleitungen 9.1 bis 9.5 wird die heiße Prozessluft, die auf einen Überdruck gehalten ist, den Verteilblöcken 8.1 bis 8.5 zugeführt und gelangt über die Verteilkammern 16 in die Luftkanäle 11 des Luftkanalsystems 10.1. Von da aus wird die Prozessluft innerhalb des Düsenträgers 1 zu den Düsenpaketen 2 geleitet.

Die Luftverteileinrichtung 7.2 und die Luftröhre 6.2 an der Längsseite 5.2 des Düsenträgers 1 sind identisch zu der Luftverteileinrichtung 7.1 und der Luftröhre 6.1 ausgebildet. Insoweit wird auf eine weitere Beschreibung verzichtet. Die Versorgungsleitungen und die Verteilblöcke der Luftverteileinrichtung 7.2 wurden in Figur 1 mit den identischen Bezugszeichen 9.1 und 8.1 versehen.

Die Anzahl und der Aufbau der Verteilsegmente an den beiden Längsseiten 5.1 und 5.2 des Düsenträgers sind vorzugsweise identisch ausgeführt, um eine gleichmäßige Zuführung der Prozessluft zu gewährleisten. Hierbei lassen sich jedoch die Verteilblöcke 8.1 bis 8.5 gegenüber dem Düsenträger 1 aus einem unterschiedlichen Material herstellen. So könnten beispielsweise die Verteilblöcke 8.1 bis 8.5 aus einem Nickelstahl und der Düsenträger 1 aus einem Stahlguss gebildet sein.

Um möglichst Wärmespannungen in den Verbindungen zwischen den Verteilblöcken 8.1 bis 8.5 und dem Düsenträger 1 zu vermeiden, sind die Dehnungsfugen in Abhängigkeit von der Länge des Düsenträgers gewählt. Die Dehnungsfugen 20 weisen dabei vorzugsweise eine Größe von wenigen Millimetern auf. Damit lassen sich auch Düsenträger mit einer Gesamtlänge von > 1.500 mm vorteilhaft ausführen.

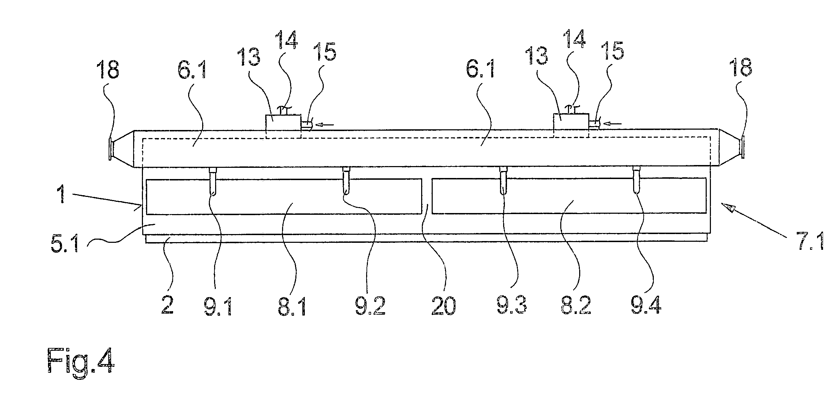

Bei dem in den Fig. 1 bis 3 gezeigten Ausführungsbeispiel sind die Anzahl der Verteilblöcke und der Versorgungsleitungen der Luftverteileinrichtungen 7.1 und 7.2 beispielhaft. Grundsätzlich können in Abhängigkeit von der Länge des Düsenträgers 1 mehr oder weniger Verteilsegmente gebildet sein. In Fig. 4 ist ein weiteres Ausführungsbeispiel der erfindungsgemäßen Vorrichtung in einer Seitenansicht gezeigt. Bei dem in Fig. 4 dargestellten Ausführungsbeispiel weist die Luftverteileinrichtung 7.1 zwei Verteilblöcke 8.1 und 8.2 auf. Jedes der Verteilblöcke 8.1 und 8.2 ist über jeweils zwei flexible Versorgungsleitungen 9.1 bis 9.4 mit der Luftröhre 6.1 verbunden. Die Verteilblöcke 8.1und 8.2 sind an der Längsseite des Düsenträgers 1 befestigt und weisen zwischen sich eine Dehnungsfuge 20 auf. Die Versorgungsleitungen 9.1 bis 9.4 sind aus einem flexiblen Material gebildet. Alternativ könnte auch ein Längenabschnitt der Versorgungsleitung 9.1 bis 9.4 zwischen der Luftröhre 6.1 und den Verteilblöcken 8.1 und 8.2 flexibel ausgebildet sein, so dass eine Entkopplung zwischen der Luftröhre und dem Düsenträger möglich ist.

Der Aufbau und die Funktion der Verteilsegmente 8.1 und 8.2 ist identisch zu dem vorgenannten Ausführungsbeispiel, so dass an dieser Stelle Bezug zu der vorgenannten Beschreibung genommen wird.

### Bezugszeichenliste

- 1: Düsenträger
- 2: Düsenpaket
- 3: Anschlussnut
- 4.1,4.2: Düsenplatte
- 4.3, 4.4: Luftleitplatte
- 5.1, 5.2: Längsseite
- 6.1, 6.2: Luftröhre
- 7.1, 7.2: Luftverteileinrichtung
- 8.1 - 8.5: Verteilblock
- 9.1 - 9.5: Versorgungsleitung
- 10.1 - 10.2: Luftkanalsystem
- 11: Luftkanal
- 12: S chmelzekanal
- 13: Spinnpumpen
- 14: Antriebswelle
- 15: Schmelzezulauf
- 16: Verteilkammer
- 17: Befestigungsbolzen
- 18: Rohrflansch
- 19: Verteilnuten
- 20: Dehnungsfuge

## Patentansprüche

1. Vorrichtung zum Schmelzblasen von synthetischen Fasern mit einem länglichen Düsenpaket (2), dass an einer Unterseite eines Düsenträgers (1) gehalten ist, mit zwei länglichen Luftröhren (6.1, 6.2), die sich an gegenüberliegenden Längsseiten (5.1, 5.2) des Düsenträgers (1) erstrecken, mit zwei im Düsenträger (1) gegenüberliegend ausgebildeten Luftkanalsystemen (10.1, 10.2), durch welche eine Prozessluft dem Düsenpaket (2) zugeführt wird, und mit zwei Luftverteileinrichtungen (7.1, 7.2), die an beiden Längsseiten (5.1, 5.2) des Düsenträgers (1) befestigt sind und die die Luftröhren (6.1, 6.2) mit den Luftkanalsystemen (10.1, 10.2) zur Verteilung der Prozessluft miteinander verbinden,
**dadurch gekennzeichnet, dass**
die Luftverteileinrichtungen (7.1, 7.2) durch mehrere an den Längsseiten (5.1, 5.2) des Düsenträgers (1) verteilt angeordnete Verteilsegmente (8.1- 8.5 / 9.1-9.5) mit jeweils einer Dehnfuge (20) zwischen benachbarten Verteilsegmenten (8.1-8.2) / 9.1-9.5) gebildet sind.

2. Vorrichtung nach Anspruch 1,
**dadurch gekennzeichnet, dass**
jedes der Verteilsegmente aus einem am Düsenträger (1) befestigten Verteilblock (8.1-8.5) und einer mit der Luftröhre (6.1, 6.2) verbundenen Versorgungsleitung (9.1-9.5) gebildet ist.

3. Vorrichtung nach Anspruch 2,
**dadurch gekennzeichnet, dass**
die Versorgungsleitungen (9.1-9.5) jeweils in einem Abschnitt zwischen der Luftröhre (6.1, 6.2) und dem Verteilerblock (8.1, 8.5) flexibel ausgebildet sind.

4. Vorrichtung nach Anspruch 2 oder 3,
**dadurch gekennzeichnet, dass**
die Verteilerblöcke (8.1-8.5) an den Längsseiten (5.1, 5.2) des Düsenträgers (1) jeweils einzelne Verteilkammern (16) bilden, an denen gleichzeitig mehrere Luftkanäle (11) des Luftkanalsystems (10.1, 10.2) angeschlossen sind.

5. Vorrichtung nach einem der Ansprüche 2 bis 4,
**dadurch gekennzeichnet, dass**
der Düsenträger (1) und die Verteilblöcke (8.1, 8.5) aus unterschiedlichen Materialien gebildet sind.

6. Vorrichtung nach einem der Ansprüche 1 bis 5,
**dadurch gekennzeichnet, dass**
die Anzahl und der Aufbau der Verteilsegmente (8.1 - 8.5, 9.1 - 9.5) an den beiden Längsseiten (5.1, 5.2) des Düsenträgers (1) identisch ausgebildet sind.

7. Vorrichtung nach einem der Ansprüche 1 bis 6,
**dadurch gekennzeichnet, dass**
der Düsenträger (1) zur Aufnahme des Düsenpaketes (2) und der Verteilsegmente (8.1-8.5, 9.2-9.5) der Luftverteileinrichtung (7.1) eine Gesamtlänge von mehr als 1.500 mm aufweist.

## Claims

1. A device for meltblowing synthetic fibers having an elongated spinneret packet (2) that is held at a bottom side of a spinneret carrier (1), having two elongated air tubes (6.1, 6.2) extending at opposite longitudinal sides (5.1, 5.2) of the spinneret carrier (1), having two air channel systems (10.1, 10.2) embodied opposite of each other in the spinneret carrier (1), by means of which process air is supplied to the spinneret packet (2), and having two air distribution devices (7.1, 7.2), which are attached on both longitudinal sides (5.1, 5.2) of the spinneret carrier (1), and which connect the air tubes (6.1, 6.2) to the air channel systems (10.1, 10.2) for the distribution of the process air,
**characterized in that**
the air distribution devices (7.1, 7.2) are embodied by way of multiple distribution segments (8.1-8.5/9.1-9.5) being arranged at the longitudinal sides (5.1, 5.2) of the spinneret carrier (1) in a distributed manner, each having an expansion joint (20) between adjacent distribution segments (8.1-8.2) / (9.1/-9.5).

2. The device according to claim 1,
**characterized in that**
each of the distribution segments is embodied from a distribution block (8.1-8.5) that is attached to the spinneret carrier (1) and from supply lines (9.1-9.5) that are connected to the air tube (6.1, 6.2).

3. The device according to claim 2,
**characterized in that**
the supply lines (9.1-9.5) are flexibly embodied in a section between the air tube (6.1, 6.2) and the distribution block (8.1, 8.5).

4. The device according to claims 2 or 3,
**characterized in that**
the distribution blocks (8.1-8.5) each form individual distribution chambers (16) at the longitudinal sides (5.1, 5.2) of the spinneret carrier (1), to which multiple air channels (11) of the air channel system (10.1, 10.2) are simultaneously connected.

5. The device according to one of the claims 2 to 4,
**characterized in that**
the spinneret carrier (1) and the distribution blocks (8.1, 8.5) are formed from different materials.

6. The device according to one of the claims 1 to 5,
**characterized in that**
the number and the construction of the distribution segments (8.1-8.5, 9.1-9.5) are embodied identically at the two longitudinal sides (5.1, 5.2) of the spinneret carrier (1).

7. The device according to one of the claims 1 to 6,
**characterized in that**
the spinneret carrier (1) has a total length of more than 1,500 mm for receiving the spinneret packet (2) and the distribution segments (8.1-8.5, 9.2-9.5) of the air distribution device (7.1).

## Revendications

1. Dispositif de fusion-soufflage de fibres synthétiques comprenant un paquet de buses allongé (2) qui est retenu sur un côté inférieur d'un support de buses (1), comprenant deux tubes d'air allongés (6.1, 6.2), qui s'étendent sur des côtés longitudinaux opposés (5.1, 5.2) du support de buses (1), deux systèmes de canaux d'air (10.1, 10.2) réalisés en opposition dans le support de buses (1), à travers lesquels un air de traitement est acheminé au paquet de buses (2), et deux dispositifs de distribution d'air (7.1, 7.2) qui sont fixés aux deux côtés longitudinaux (5.1, 5.2) du support de buses (1) et qui relient l'un à l'autre les tubes d'air (6.1, 6.2) aux systèmes de canaux d'air (10.1, 10.2) pour distribuer l'air de traitement,
**caractérisé en ce que**
les dispositifs de distribution d'air (7.1, 7.2) sont formés par plusieurs segments de distribution (8.1-8.5 / 9.1-9.5) répartis sur les côtés longitudinaux (5.1, 5.2) du support de buses (1) avec à chaque fois un joint de dilatation (20) entre des segments de distribution adjacents (8.1-8.2 / 9.1-9.5).

2. Dispositif selon la revendication 1,
**caractérisé en ce que**
chacun des segments de distribution est formé d'un bloc de distribution (8.1-8.5) fixé sur le support de buses (1) et d'une conduite d'alimentation (9.1-9.5) connectée au tube d'air (6.1, 6.2).

3. Dispositif selon la revendication 2,
**caractérisé en ce que**
les conduites d'alimentation (9.1-9.5) sont réalisées sous forme flexible à chaque fois dans une portion entre les tubes d'air (6.1, 6.2) et le bloc de distribution (8.1, 8.5).

4. Dispositif selon la revendication 2 ou 3,
**caractérisé en ce que**
les blocs de distribution (8.1-8.5) forment au niveau des côtés longitudinaux (5.1, 5.2) du support de buses (1) à chaque fois des chambres de distribution individuelles (16), auxquelles sont raccordés simultanément plusieurs canaux d'air (11) du système de canaux d'air (10.1, 10.2).

5. Dispositif selon l'une quelconque des revendications 2 à 4,
**caractérisé en ce que**
le support de buses (1) et les blocs de distribution (8.1, 8.5) sont formés de différents matériaux.

6. Dispositif selon l'une quelconque des revendications 1 à 5,
**caractérisé en ce que**
le nombre et la structure des segments de distribution (8.1-8.5, 9.1-9.5) sont réalisés de manière identique sur les deux côtés longitudinaux (5.1, 5.2) du support de buses (1).

7. Dispositif selon l'une quelconque des revendications 1 à 6,
**caractérisé en ce que**
le support de buses (1) présente, pour recevoir le paquet de buses (2) et les segments de distribution (8.1-8.5, 9.2-9.5) du dispositif de distribution d'air (7.1), une longueur totale de plus de 1500 mm.
